# EUROPEAN PATENT SPECIFICATION

(11) **EP 4 492 312 B1**
(45) Date of publication and mention of the grant of the patent: **27.05.2026**
(21) Application number: 24187936.0
(22) Date of filing: 11.07.2024
(51) Int. Cl.: G06Q 20/08, G06Q 20/38, G06Q 20/40

(54) **COMPUTER-IMPLEMENTED METHOD FOR AUTHORIZING TRANSACTIONS**
COMPUTERIMPLEMENTIERTES VERFAHREN ZUR AUTORISIERUNG VON TRANSAKTIONEN
PROCÉDÉ MIS EN UVRE PAR ORDINATEUR POUR AUTORISER DES TRANSACTIONS

(30) Priority: 13.07.2023 IT 202300014739
(43) Date of publication of application: 15.01.2025
(73) Proprietor: Erreci Italia S.r.l., 04023 Formia (LT) (IT)
(72) Inventor: RICCARDELLI, GERARDO, 04023 FORMIA (LT) (IT)
(74) Representative: Giuliano, Natalia

(56) References cited:
- US-A1- 2009 177 587
- US-A1- 2017 011 395
- US-A1- 2019 147 453

## Description

The present invention is related to a computer-implemented method for authorizing transactions.

Furthermore, the present invention is also related to a system performing the steps of the computer-implemented method for authorizing transactions.

In particular, the present invention is related to a computer-implemented method for authorizing transactions which guarantees a high level of security to the aforementioned transactions both in sores and online, for example during e-commerce operations.

Transactions exploiting credit instruments allow the traceability of operations and the dematerialization of cash but, as a drawback, expose the interested parties to the risk of potential frauds, primarily the subtraction of the identification codes of the credit instruments themselves.

Several computer-implemented methods for authorizing transactions are currently known.

A first example of a known technical solution consists of the patent application ITRM20020656A1, which cites a method of authorizing payment orders using credit instruments in which a buyer purchases at least one good and/or at least one service on a commercial site through an order of purchase uniquely determined by an identification number. The method includes the steps of communicating to the buyer a code identifying the purchase order by the commercial site, transferring at least one first portion of the identification data of the credit instrument by the buyer to the commercial site through a first channel of communication, sending, from the commercial site to the issuing institution, a request for authorization of the payment order including the identification code of the purchase order and the first portion of the identification data of the credit instrument, and communicating the identification code of the purchase order and at least one second portion of the identification data of the credit instrument by the buyer to the issuing institution, through a second communication channel. The method also includes the verification, by the issuing institution, of the validity of the credit instrument corresponding to the first and second portions of the identification data, and sending, by the issuer to the commercial site, the confirmation or denial of the authorization.

In addition, the patent application US2018005210A1 describes a system and a method to speed up and secure the entry of payment data, the authorization and the payment itself, both for purchases in shops and online. A mobile app, a widget, a browser extension or a service installed on a mobile communication device generates a barcode to be scanned at a POS terminal. An optional confirmation is sent to the aforementioned app, browser extension, widget or service installed on a mobile or fixed communications device, to confirm a purchase. The method allows a shopper to use the same app, widget, browser extension or installed service to make purchases from any retailer equipped with specific software, associated with the service.

The patent application US2019147453A1 methods, apparatus, and systems for maintaining the security of certain sensitive user information during computer network transactions between the user and multiple third-party hosts. Some example embodiments disclosed herein comprise a computer-implemented method comprising, at a server separate from a merchant server and separate from a payment processor server, receiving data indicative of a transaction initiated by a customer from the merchant server, generating a unique identification value for the transaction, transmitting, to a customer's computing device, identifying information for a URL, Uniform Resource Locator, that is unique to the transaction. The method comprised also the steps of receiving a request to view a web page at the URL that is unique to the transaction, and generating data for a hosted-pay web page unique to the transaction, the hosted-pay web page including an embedded portion that facilitates payment directly with a payment processor server and not with a merchant server.

The patent application US2017011395A1 cites computer systems, methods and supports for communicating secure data via electronic devices, in differentiated ways, during online transactions. According to an embodiment, a method includes, among other things, in a subsystem of a commercial entity, receiving, from an electronic device, transaction data from a device that includes credentials indicative of a payment, accessing an identifier of the transaction and generating a key based on the same identifier. The method further comprises also the steps of transmitting to one of the subsystems of a merchant and to the electronic device the payment data comprising a first portion of the credentials and the transaction identifier, and sharing, with the financial institution using the key of the transaction, data that includes a second portion of the credentials.

Finally, the patent application US7431207B1 describes a commercial transaction, during which a merchant receives a credit card payment request from a customer. The merchant redirects the customer to the card issuer, whose authorization server communicates with the customer and verifies his identity as the true holder of the card exhibited for payment. In a first embodiment, the merchant sends an authorization request in response to a card payment request to the server of the issuer, and receives an authorization confirmation from the server upon verification of the identity of the card holder. According to a second embodiment, the customer receives a confirmation of authorization from the server when authenticating the identity of the card holder, and sends the confirmation itself to the merchant who, in turn, certifies the confirmation with the server of the issuer.

However, these known methods suffer from the limitation of not ensuring a high level of security, especially in terms of processing the information underlying the transactions, which is often subject to exfiltration and fraudulent use.

The purpose of the present invention is to provide a computer-implemented method for authorizing transactions which ensures, through a two-step verification, a reasonable certainty of not incurring the risk of computer fraud during financial transactions, having therefore characteristics such as to overcome the limits that still affect current similar computer-implemented methods, with reference to the prior art.

According to the present invention, a computer-implemented method for authorizing transactions id provided, as defined in claim 1.

For a better understanding of the present invention, a preferred embodiment is now described, purely by way of non-limiting example, with reference to the attached drawings, in which:
- figure 1 shows a block diagram representing the steps of a computer-implemented method for authorizing transactions, according to the invention, applied to the purchase of goods/services;
- figure 2 shows a further block diagram representing the steps of the computer-implemented method for authorizing transactions, according to the invention, applied to the booking of goods/services.

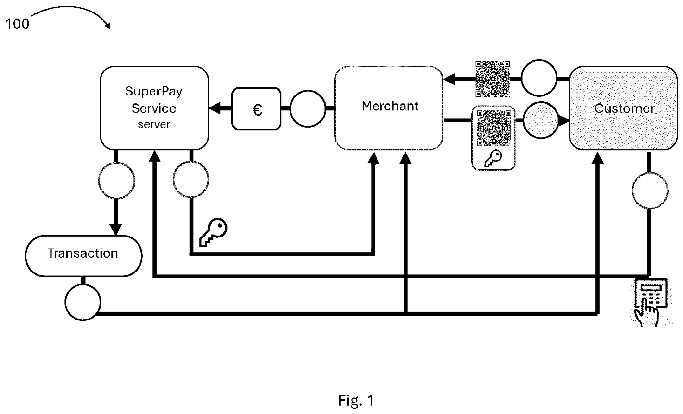

With reference to these figures and, in particular, to figure 1, a computer-implemented method for authorizing transactions is shown, according to the invention.

In particular, the computer-implemented method 100 for authorizing transactions comprises the steps:
- of generating, by a first user, able to referred to as customer or beneficiary, by means of a processing module executed by a first electronic device of the first user or customer, a first identification code, for example a QR code, comprising a first portion of data identifying a credit instrument owned by said first user;
- of sending, by the first electronic device of the first user to a processing system, the first identification code, personal data concerning the first user and data related to a transaction in progress performed by said first user;
- of generating, by said processing system, a security code uniquely identifying the transaction, implemented as mentioned in the following preferably by means of a token, for example an NFC token or an additional QR code, with said security code being sent to a second electronic device of a second user, preferably a merchant, by the processing system;
- of generating, by means of the processing module executed by the second electronic device, a second identification code comprising the aforementioned security code;
- of sending, by the second electronic device of the second user to the first electronic device of the first user, said second identification code comprising the security code;
- of sending, by the first user by means of the processing module to the processing system, the second identification code comprising the security code and a second portion of data identifying the credit instrument;
- of verifying, by the processing system: the correspondence between the security code integrated in the second identification code and the security code previously generated; and the validity of the credit instrument corresponding to the concatenation of first and second portions of the identification data;
- of requiring, by the processing system, the execution of the transaction to a managing office of financial services, the latter able to be referred to as a payment gateway, or transaction manager;
- of updating, by the processing system, said first and second user, respectively the customer and the merchant, about the outcome of the transaction by means of the processing module.

According to one aspect of the invention, the first portion of data identifying the credit instrument consists of a first half of the number of a credit card.

According to one aspect of the invention, the second portion of data identifying the credit instrument consists of the second half of the number of the aforementioned credit card.

According to another aspect of the invention, the security code sent back from the first user to the processing system, integrated in the second identification code, is verified by the processing system itself, that generates it in the first place, ensuring the correspondence of the token comprised in the second identification code with the original token, sent to the second user by the processing system.

According to one aspect of the invention, the processing module, executed by the first and second electronic device, is a specific mobile app, able to be referred to as "SuperPayService" app.

According to one aspect of the invention, the processing system is a PC server, preferably a cloud server, able to be referred to as "SuperPayService" server.

According to one aspect of the invention, during the step of verification of the data, the "SuperPayService" server stores only half of the numbers of the credit cards associated with the services provided.

According to one aspect of the invention, the first identification code and the second identification code are QR codes, or other types of digital codes, for example NFC tokens.

According to one aspect of the invention, the security code is preferably, as described, a digital token.

According to one aspect of the invention, as said, the second user is a merchant or supplier, and the first user is a customer or beneficiary of the same merchant or supplier, who performs the transaction in a store of the merchant himself or online, for example on an e-commerce channel pertaining the merchant.

According to another aspect of the invention, the merchant logs in to the "SuperPayService" app with supplier credentials, and the customer logs in to the same app with user credentials.

According to another aspect of the invention, the first and second electronic devices consist of fixed or mobile terminals, preferably smartphones, tablets, notebooks or desktop PCs.

According to one aspect of the invention, the first identification code is uniquely coupled with the first electronic device, the second identification code is uniquely coupled with the second electronic device and the security code is uniquely coupled with the processing system.

According to another aspect of the invention, the aforementioned unique couplings are made by means, for example, of IMEI, SOCKET-ID, or ICCID.

According to another aspect of the invention, the transaction comprises a purchase of goods and/or services or a reservation and/or rental of goods and/or services.

Advantageously according to the invention, the computer-implemented method for authorizing transactions is able to be applied in different contexts, as described, in a non-limiting manner, for example during purchases or rental/booking of goods/services.

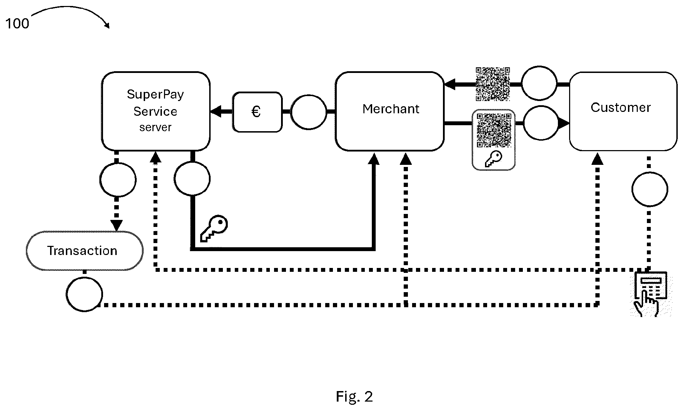

Advantageously according to the invention, in the case of the computer-implemented method applied to the reservation/booking of goods/services, schematized in figure 2, by means of the "SuperPayService" app the merchant or supplier is able to manage:
- what to provide;
- the concerning prices;
- the related validity time intervals;
- the penalties to be paid by the customer in the event of a failed transaction within preset times.

According to one aspect of the invention, again in the case of rental/booking of goods/services, the reservation generated on the "SuperPayService" server is transmitted and viewable on the first and second electronic device, used respectively by the customer and the supplier.

Advantageously according to the invention, the computer-implemented method applied to the rental/booking of goods/services, able to be referred to as "EasyRent" and schematized in figure 2, allows to manage reservations for hotels, restaurants, rental of beach equipment and cars, ticketing and other cases of compatible use with entities of temporal kind.

Advantageously according to the invention, the "EasyRent" computer-implemented method is highly scalable and can be used in multiple contexts, maintaining the same data structure and a single set of instructions, as well as being compatible with the iCalendar protocol, a factor that allows easy sharing, importing and exporting of entities able to booked.

Advantageously according to the invention, the "EasyRent" computer-implemented method is available both in a web-based version for desktop PCs and portable terminals, with access to all features, and as a mobile app, provided with reduced functionality.

According to one aspect of the invention, the reservations and tickets generated through the "EasyRent" booking system, related to the "SuperPayService", generate a specific payment request according to which, depending on the type of booking, several options are provided, including blocking the amount of the reservation, the definition of a penalty with a charge in case of no-show, and a direct payment. Once the transaction request with the specifications indicated has been accepted, the unlocking and crediting operations are performed according to a deadline, with a high security of the transaction.

Advantageously according to the invention, the "EasyRent" computer-implemented method for managing reservations, through specific APIs, allows to generate payment requests for ERP platforms, receiving data concerning invoices and issuing the aforementioned requests in bulk, thus simplifying the management of complex operations for companies.

The present invention is also related to a computer program product, i.e., a specific software application, comprising instructions which, when such a computer program product is executed by a generic computer, cause the latter to perform the steps of the computer-implemented method for authorizing transactions, described so far.

In addition, the present invention is also related to a processing system comprising at least one server and a first and second electronic device, with the aforementioned server provided with at least one network interface and access to the Internet.

According to another aspect of the invention, the aforementioned processing system is able to execute the computer program product whose sequence of instructions performs the steps of the computer-implemented method for authorizing transactions.

Therefore, the computer-implemented method for authorizing transactions according to the invention allows to achieve a substantial security level during financial transactions.

Furthermore, the computer-implemented method for authorizing transactions according to the invention is efficient and functional.

Another advantage of the computer-implemented method for authorizing transactions according to the invention is that such a method allows a customer to perform transactions safely both at a physical store and online via an e-commerce channel.

Another advantage of the computer-implemented method for authorizing transactions according to the invention, applied to the management of reservations, is that the method itself is able to be interfaced with ERP platforms.

Another advantage of the computer-implemented method for authorizing transactions according to the invention is that its use does not require advanced technical skills.

It is finally clear that the computer-implemented method for authorizing transactions and the related system, described and illustrated herein, may be subject to modifications and variations without departing from the protective scope of the present invention, as defined in the appended claims.

## Claims

1. Computer-implemented method (100) for authorizing transactions, the method comprising the following steps:
- generating, by a first user by means of a processing module executed by a first electronic device of the first user, a first identification code comprising a first portion of data identifying a credit instrument owned by said first user;
- sending, by the first electronic device of the first user to a processing system, the first identification code, personal data concerning the first user and data related to a transaction in progress performed by said first user;
- generating, by said processing system, a security code uniquely identifying the transaction, said security code being sent to a second electronic device of a second user by the processing system;
- generating, by means of the processing module executed by the second electronic device, a second identification code comprising said security code;
- sending, by the second electronic device of the second user to the first electronic device of the first user, said second identification code comprising the security code;
- sending, by the first user by means of the processing module to the processing system, the second identification code comprising the security code and a second portion of data identifying the credit instrument;
- verifying, by the processing system: the correspondence between said security code integrated in the second identification code and the security code previously generated; and the validity of the credit instrument corresponding to the concatenation of first and second portions of the identification data;
- requesting, by the processing system, the execution of the transaction to a managing office of financial services.

2. Computer-implemented method (100) according to claim 1, **characterized in that** the first portion of data identifying a credit instrument consists of a first half of the number of a credit card, and **in that** the second portion of data identifying said credit instrument consists of the second half of the number of said credit card credit.

3. Computer-implemented method (100) according to claim 1, **characterized in that** the first identification code and the second identification code are QR codes.

4. Computer-implemented method (100) according to claim 1, **characterized in that** the security code is a token.

5. Computer-implemented method (100) according to claim 1, **characterized in that** the first identification code is uniquely coupled with the first electronic device, the second identification code is uniquely coupled with the second electronic device and the security code is uniquely coupled with the processing system.

6. Computer-implemented method (100) according to claim 1, **characterized in that** the transaction comprises a purchase of goods and/or services or a reservation and/or a rental of goods and/or services.

7. Computer-implemented method (100) according to claim 1, **characterized in** comprising the step of updating, by the processing system, said first and second user, respectively a customer and a merchant, about the outcome of the transaction by means of the processing module following the step of requiring the execution of the transaction.

8. Computer program product comprising instructions which, when said computer program product is executed by a computer, cause a computer to perform the steps of the computer-implemented method (100) according to one of the previous claims.

9. Processing system comprising at least one server, a first and a second electronic device, **characterized in that** said server is provided with at least one network interface and Internet access and is able to execute the computer program product according to claim 8.

## Patentansprüche

1. Computerimplementiertes Verfahren (100) zum Autorisieren von Transaktionen, wobei das Verfahren die folgenden Schritte umfasst:
- Erzeugen, durch einen ersten Benutzer mittels eines Verarbeitungsmoduls, das durch eine erste elektronische Vorrichtung des ersten Benutzers ausgeführt wird, eines ersten Identifikationscodes, umfassend einen ersten Datenteil, der ein Kreditinstrument identifiziert, das dem ersten Benutzer gehört;
- Senden, durch die erste elektronische Vorrichtung des ersten Benutzers an ein Verarbeitungssystem, des ersten Identifikationscodes, personenbezogener Daten betreffend den ersten Benutzer und von Daten in Bezug auf eine laufende Transaktion, die durch den ersten Benutzer durchgeführt wird;
- Erzeugen, durch das Verarbeitungssystem, eines Sicherheitscodes, der die Transaktion eindeutig identifiziert, wobei der Sicherheitscode an eine zweite elektronische Vorrichtung eines zweiten Benutzers durch das Verarbeitungssystem gesendet wird;
- Erzeugen, mittels des Verarbeitungsmoduls, das durch die zweite elektronische Vorrichtung ausgeführt wird, eines zweiten Identifikationscodes, der den Sicherheitscode umfasst;
- Senden, durch die zweite elektronische Vorrichtung des zweiten Benutzers an die erste elektronische Vorrichtung des ersten Benutzers, des zweiten Identifikationscodes, der den Sicherheitscode umfasst;
- Senden, durch den ersten Benutzer mittels des Verarbeitungsmoduls an das Verarbeitungssystem, des zweiten Identifikationscodes, der den Sicherheitscode umfasst, und eines zweiten Datenteils, der das Kreditinstrument identifiziert;
- Verifizieren, durch das Verarbeitungssystem: der Übereinstimmung zwischen dem Sicherheitscode, der in den zweiten Identifikationscode integriert ist, und dem zuvor erzeugten Sicherheitscode; und der Gültigkeit des Kreditinstruments, das der Verkettung des ersten und zweiten Datenteils der Identifikationsdaten entspricht;
- Anfordern, durch das Verarbeitungssystem, der Ausführung der Transaktion bei einer Verwaltungsstelle für Finanzdienstleistungen.

2. Computerimplementiertes Verfahren (100) nach Anspruch 1, **dadurch gekennzeichnet, dass** der erste Datenteil, der ein Kreditinstrument identifiziert, aus einer ersten Hälfte der Nummer einer Kreditkarte besteht, und dass der zweite Datenteil, der das Kreditinstrument identifiziert, aus der zweiten Hälfte der Nummer der Kreditkarte besteht.

3. Computerimplementiertes Verfahren (100) nach Anspruch 1, **dadurch gekennzeichnet, dass** der erste Identifikationscode und der zweite Identifikationscode QR-Codes sind.

4. Computerimplementiertes Verfahren (100) nach Anspruch 1, **dadurch gekennzeichnet, dass** der Sicherheitscode ein Token ist.

5. Computerimplementiertes Verfahren (100) nach Anspruch 1, **dadurch gekennzeichnet, dass** der erste Identifikationscode eindeutig mit der ersten elektronischen Vorrichtung gekoppelt ist, der zweite Identifikationscode eindeutig mit der zweiten elektronischen Vorrichtung gekoppelt ist und der Sicherheitscode eindeutig mit dem Verarbeitungssystem gekoppelt ist.

6. Computerimplementiertes Verfahren (100) nach Anspruch 1, **dadurch gekennzeichnet, dass** die Transaktion einen Kauf von Waren und/oder Dienstleistungen oder eine Reservierung und/oder eine Miete von Waren und/oder Dienstleistungen umfasst.

7. Computerimplementiertes Verfahren (100) nach Anspruch 1, **dadurch gekennzeichnet, dass** es den Schritt des Aktualisierens, durch das Verarbeitungssystem, des ersten und zweiten Benutzers, umfassend, jeweils eines Kunden und eines Händlers, über das Ergebnis der Transaktion mittels des Verarbeitungsmoduls im Anschluss an den Schritt des Anforderns der Ausführung der Transaktion umfasst.

8. Computerprogrammprodukt, umfassend Anweisungen, die, wenn das Computerprogrammprodukt durch einen Computer ausgeführt wird, einen Computer veranlassen, die Schritte des computerimplementierten Verfahrens (100) nach einem der vorherigen Ansprüche auszuführen.

9. Verarbeitungssystem, umfassend mindestens einen Server, eine erste und eine zweite elektronische Vorrichtung, **dadurch gekennzeichnet, dass** der Server mit mindestens einer Netzwerkschnittstelle und Internetzugang versehen ist und in der Lage ist, das Computerprogrammprodukt nach Anspruch 8 auszuführen.

## Revendications

1. Procédé mis en œuvre par ordinateur (100) pour autoriser des transactions, le procédé comprenant les étapes suivantes :
- la génération, par un premier utilisateur au moyen d'un module de traitement exécuté par un premier dispositif électronique du premier utilisateur, d'un premier code d'identification comprenant une première partie de données identifiant un instrument de crédit appartenant audit premier utilisateur ;
- l'envoi, par le premier dispositif électronique du premier utilisateur à un système de traitement, du premier code d'identification, de données personnelles concernant le premier utilisateur et de données relatives à une transaction en cours réalisée par ledit premier utilisateur ;
- la génération, par ledit système de traitement, d'un code de sécurité identifiant de manière unique la transaction, ledit code de sécurité étant envoyé à un second dispositif électronique d'un second utilisateur par le système de traitement ;
- la génération, au moyen du module de traitement exécuté par le second dispositif électronique, un second code d'identification comprenant ledit code de sécurité ;
- l'envoi, par le second dispositif électronique du second utilisateur au premier dispositif électronique du premier utilisateur, dudit second code d'identification comprenant le code de sécurité ;
- l'envoi, par le premier utilisateur au moyen du module de traitement au système de traitement, du second code d'identification comprenant le code de sécurité et une seconde partie de données identifiant l'instrument de crédit ;
- la vérification, par le système de traitement : de la correspondance entre ledit code de sécurité intégrée dans le second code d'identification et le code de sécurité précédemment généré ; et la validité de l'instrument de crédit correspondant à la concaténation des première et seconde parties des données d'identification ;
- la demande, par le système de traitement, de l'exécution de la transaction à un bureau de gestion de services financiers.

2. Procédé mis en œuvre par ordinateur (100) selon la revendication 1, **caractérisé en ce que** la première partie de données identifiant un instrument de crédit consiste en une première moitié du numéro d'une carte de crédit, et **en ce que** la seconde partie de données identifiant ledit instrument de crédit consiste en la seconde moitié du numéro de ladite carte de crédit.

3. Procédé mis en œuvre par ordinateur (100) selon la revendication 1, **caractérisé en ce que** le premier code d'identification et le second code d'identification sont des codes QR.

4. Procédé mis en œuvre par ordinateur (100) selon la revendication 1, **caractérisé en ce que** le code de sécurité est un jeton.

5. Procédé mis en œuvre par ordinateur (100) selon la revendication 1, **caractérisé en ce que** le premier code d'identification est couplé de manière unique au premier dispositif électronique, le second code d'identification est couplé de manière unique au second dispositif électronique et le code de sécurité est couplé de manière unique au système de traitement.

6. Procédé mis en œuvre par ordinateur (100) selon la revendication 1, **caractérisé en ce que** la transaction comprend un achat de biens et/ou de services ou une réservation et/ou une location de biens et/ou de services.

7. Procédé mis en œuvre par ordinateur (100) selon la revendication 1, **caractérisé en ce qu'**il comprend l'étape de mise à jour, par le système de traitement, dudit premier et second utilisateur, respectivement un client et un commerçant, du résultat de la transaction au moyen du module de traitement suivant l'étape d'exigence d'exécution de la transaction.

8. Produit de programme informatique comprenant des instructions qui, lorsque ledit produit de programme informatique est exécuté par un ordinateur, amènent un ordinateur à réaliser les étapes du procédé mis en œuvre par ordinateur (100) selon l'une des revendications précédentes.

9. Système de traitement comprenant au moins un serveur, un premier et un second dispositif électronique, **caractérisé en ce que** ledit serveur est pourvu d'au moins une interface réseau et d'un accès Internet et est capable d'exécuter le produit de programme informatique selon la revendication 8.
